# EUROPÄISCHE PATENTSCHRIFT

(11) **EP 1 735 890 B1**
(45) Veröffentlichungstag und Bekanntmachung des Hinweises auf die Patenterteilung: **21.04.2010**
(21) Anmeldenummer: 05729539.6
(22) Anmeldetag: 23.03.2005
(51) Int. Cl.: H02J 3/38, H02J 9/04

(54) **ELEKTRISCHE ANLAGE ZUR KOPPLUNG EINES STROMVERSORGUNGSNETZES UND EINES ZENTRALEN GLEICHSPANNUNGSSTRANGS SOWIE VERFAHREN ZUM BETRIEB EINER SOLCHEN ANLAGE**
ELECTRIC INSTALLATION FOR COUPLING A POWER SUPPLY SYSTEM AND A CENTRAL DIRECT CURRENT BRANCH AND METHOD FOR OPERATING AN INSTALLATION OF THIS TYPE
DISPOSITIF ELECTRIQUE DESTINE AU COUPLAGE D'UN RESEAU D'ALIMENTATION ELECTRIQUE ET D'UNE BRANCHE A TENSION CONTINUE CENTRALE ET PROCEDE D'UTILISATION D'UN TEL DISPOSITIF

(30) Priorität: 30.03.2004 DE 102004016034
(43) Veröffentlichungstag der Anmeldung: 27.12.2006
(73) Patentinhaber: Alstom Technology Ltd, 5400 Baden (CH)
(72) Erfinder: DRUBEL, Oliver, 91257 Pegnitz (DE)
(86) Internationale Anmeldenummer: PCT/EP2005/051341
(87) Internationale Veröffentlichungsnummer: WO 2005/096467

(56) Entgegenhaltungen:
- DE-A1- 4 232 516
- DE-U1- 20 113 372
- G.CRAMER, R. GREBE: "Wind-Diesel-Batteriesystem auf Cape Clear, Statusbericht für das Jahr 1990 zum Forschungsvorhaben O3E-8536-B des Bundesministeriums für Forschung und Technologie" 31. Dezember 1990 (1990-12-31), BUNDESMINISTERIUM FÜR FORSCHUNG UND TECHNOLOGIE , XP001206936 Seite 688 - Seite 701
- DUCA C ET AL: "WIRKUNGSGRADOPTIMIERTE USV-ANLAGEN" ELEKTROTECHNISCHE ZEITSCHRIFT - ETZ, VDE VERLAG GMBH. BERLIN, DE, Bd. 111, Nr. 20, 1. Oktober 1990 (1990-10-01), Seite 1048,1050,1052,, XP000171183 ISSN: 0948-7387
- HARDAN F ET AL: "Application of a power-controlled flywheel drive for wind power conditioning in a wind/diesel power system" ELECTRICAL MACHINES AND DRIVES, 1999. NINTH INTERNATIONAL CONFERENCE ON (CONF. PUBL. NO. 468) CANTERBURY, UK 1-3 SEPT. 1999, LONDON, UK,IEE, UK, 1. September 1999 (1999-09-01), Seiten 65-70, XP006502097 ISBN: 0-85296-720-9

## Beschreibung

### TECHNISCHES GEBIET

Die vorliegende Erfindung bezieht sich auf das Gebiet der Stromversorgungsnetze. Sie betrifft eine elektrische Anlage zur Kopplung eines Stromversorgungsnetzes und eines zentralen Gleichspannungsstrangs gemäss dem Oberbegriff des Anspruchs 1. Sie betrifft weiterhin ein Verfahren zum Betrieb einer solchen Anlage.

### STAND DER TECHNIK

In den letzten Jahren waren Stromversorgungsnetze bzw. Energieverteilungsnetze in zunehmenden Masse von sog. "Blackouts" betroffen. Diese "Blackouts" werden hauptsächlich durch die Fehlfunktion von Anlagenteilen im Zusammenhang mit der Energieübertragung über grosse Entfernungen verursacht. Zusätzlich verändern sich die Umstände der Energieverteilung von einer Kombination aus gut steuerbarer Energieerzeugung und kaum steuerbarem Energieverbrauch zu einer Kombination aus nicht steuerbarer Energieerzeugung - wie z.B. bei der Windenergie - und nicht gesteuertem Energieverbrauch. Diese neuartige Situation erfordert ökonomische Energiespeicherungssysteme mit niedrigen Effizienzverlusten. Um diese Situation beherrschen zu können, müssen mehr und mehr Speichersysteme in das System der Versorgungsnetze eingefügt werden. Wesentlich für die Effektivität solcher Massnahmen ist nicht nur die effiziente Speicherung der Energie, sondern auch die Berücksichtigung der Topologie der Netzsysteme.

Aus der Druckschrift DE-U1-201 13 372 ist ein Hybridsystem zur autarken Energieversorgung in einem Inselnetz bekannt, bei der das Inselnetz aus einer Gleichstromschine über einen Wechselrichter versorgt wird. An die Gleichstromschiene ist ein Dieselgenerator, eine Windkraftanlage und ein Schwungradspeicher angeschlossen. Sind die Windverhältnisse ausreichend, wird das Netz über einen Gleichrichter und die Gleichstromschiene von der Windkraftanlage gespeist, wobei gleichzeitig der Schwungradspeicher aus der Gleichstromschiene über einen Wechselrichter geladen wird. Kann die Stromversorgung von der Windkraftanlage nicht mehr aufrecht erhalten werden, übernimmt der Schwungradspeicher die Versorgung. Erst wenn diese beiden Maschinen nicht mehr einsetzbar sind, erfolgt die Lastübernahme durch den Dieselgenerator, der über einen Gleichrichter auf die Gleichstromschiene arbeitet.

### DARSTELLUNG DER ERFINDUNG

Es ist Aufgabe der Erfindung, eine elektrische Anlage zur Kopplung eines Stromversorgungsnetzes und eines zentralen Gleichspannungsstrangs zu schaffen, mit welcher auf einfache und besonders effektive Weise die Stabilität des Netzes verbessert werden kann, sowie ein Verfahren zum Betrieb einer solchen Anlage anzugeben.

Die Aufgabe wird durch die Gesamtheit der Merkmale der Ansprüche 1, bzw. 11 gelöst. Der Kern der Erfindung besteht darin, einen rotierenden Massenspeicher vorzusehen, welcher je nach Bedarf und Netzzustand wahlweise über den AC-DC-Umrichter oder die Gleichrichterbrücke mit dem zentralen Gleichspannungsstrang oder direkt mit dem Stromversorgungsnetz verbindbar ist. Hier ist es möglich, wahlweise Wirkleistung oder Blindleistung aus dem rotierenden Massenspeicher in das Netz einzuspeisen, oder Wirkleistung aus dem zentralen Gleichspannungsstrang aufzunehmen oder an den zentralen Gleichspannungsstrang abzugeben. Der zentrale Gleichspannungsstrang kann dabei Teil eines (grösseren) Gleichspannungsnetzes sein.

Gemäss einer bevorzugten Ausgestaltung der Erfindung umfasst der rotierende Massenspeicher eine rotierende Masse, welche mit einer wahlweise als Motor oder Generator arbeitenden Synchronmaschine gekoppelt ist.

Zum wahlweisen Verbinden des Stromversorgungsnetzes und des rotierenden Massenspeichers untereinander oder mit dem zentralen Gleichspannungsstrang sind entsprechende Schalter vorgesehen.

Insbesondere erfolgt die Verbindung der Synchronmaschine des rotierenden Massenspeichers mit den übrigen Teile der elektrischen Anlage über einen Transformator.

Eine weitere bevorzugte Ausgestaltung der erfindungsgemässen Anlage zeichnet sich dadurch aus, dass am Ausgang der Gleichrichterbrücke Glättungskondensatoren angeordnet sind. Zusätzlich kann an den zentralen Gleichspannungsstrang ein Gleichstromspeicher, insbesondere in Form einer supraleitenden Spule oder einer Kondensatorbatterie, angeschlossen sein.

In einer anderen Ausgestaltung der Erfindung ist parallel zum rotierenden Masse n-speicher wenigstens eine Windenergieanlage vorgesehen, welche wahlweise mit dem rotierenden Massenspeicher verbindbar ist, wobei die wenigstens eine Windenergieanlage ein mit einer Asynchronmaschine gekoppeltes Windrad umfasst und zum wahlweisen Verbinden der Windenergieanlage mit dem rotierenden Massenspeicher entsprechende Schalter vorgesehen sind.

Eine bevorzugte Ausgestaltung des Verfahrens nach der Erfindung ist dadurch gekennzeichnet, dass der rotierende Massenspeicher zur Einspeisung von Blindleistung an das Stromversorgungsnetz angeschlossen wird, und dass das Stromversorgungsnetz über die Gleichrichterbrücke Wirkleistung in den zentralen Gleichspannungsstrang einspeist

Eine andere bevorzugte Ausgestaltung des Verfahrens nach der Erfindung ist dadurch gekennzeichnet, dass der rotierende Massenspeicher über die Gleichrichterbrücke Wirkleistung in den zentralen Gleichspannungsstrang einspeist, und dass über den AC-DC-Umrichter Wirkleistung aus dem zentralen Gleichspannungsstrang in das Stromversorgungsnetz eingespeist wird.

Eine weitere bevorzugte Ausgestaltung des Verfahrens nach der Erfindung ist dadurch gekennzeichnet, dass in den rotierenden Massenspeicher über den AC-DC-Umrichter Wirkleistung aus dem zentralen Gleichspannungsstrang eingespeist wird, und dass das Stromversorgungsnetz über die Gleichrichterbrücke Wirkleistung in den zentralen Gleichspannungsstrang einspeist.

Weiterhin ist es denkbar, dass sowohl das Stromversorgungsnetz als auch der rotierende Massenspeicher über die Gleichrichterbrücke Wirkleistung in den zentralen Gleichspannungsstrang einspeisen.

Ebenso ist es möglich, dass sowohl das Stromversorgungsnetz als auch der rotierende Massenspeicher über den AC-DC-Umrichter mit Wirkleistung aus dem zentralen Gleichspannungsstrang versorgt werden.

Im Zusammenhang mit einer Windenergieanlage ist es besonders günstig, wenn der rotierende Massenspeicher Blindleistung in die wenigstens eine Windenergieanlage einspeist. Auch ist es vorteilhaft, wenn der rotierende Massenspeicher zunächst über den AC-DC-Umrichter aus dem zentralen Gleichspannungsstrang aufgestartet wird und dann mit der wenigstens einen Windenergieanlage verbunden wird.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: das vereinfachte Schaltbild einer elektrischen Anlage gemäss ei- nem ersten bevorzugten Ausführungsbeispiel der Erfindung, wobei Stromversorgungsnetz und rotierender Massenspeicher direkt miteinander verbunden sind und Blindleistung austauschen rund das Stromversorgungsnetz über eine Gleichrichterbrücke in einen zentralen Gleichspannungsstrang Wirkleistung einspeist;
- Fig. 2: die Anlage aus Fig. 1, bei der das Stromversorgungsnetz Wirk- leistung aus dem zentralen Gleichspannungsstrang erhält und der rotierende Massenspeicher Wirkleistung an den zentralen Gleich- spannungsstrang abgibt;
- Fig. 3: die Anlage aus Fig. 1, bei der der rotierende Massenspeicher Wirkleistung aus dem zentralen Gleichspannungsstrang erhält und das Stromversorgungsnetz Wirkleistung an den zentralen Gleich- spannungsstrang abgibt;
- Fig. 4: die Anlage aus Fig. 1, bei der der rotierende Massenspeicher und das Stromversorgungsnetz Wirkleistung an den zentralen Gleich- spannungsstrang abgeben;
- Fig. 5: die Anlage aus Fig. 1, bei der der rotierende Massenspeicher und das Stromversorgungsnetz Wirkleistung aus dem zentralen Gleichspannungsstrang erhalten;
- Fig. 6: das vereinfachte Schaltbild einer elektrischen Anlage gemäss ei- nem zweiten bevorzugten Ausführungsbeispiel der Erfindung, wo- bei parallel zum rotierenden Massenspeicher wenigstens ein Windrad angeordnet ist; und
- Fig. 7: die Anlage aus Fig. 6, bei der zunächst der rotierende Massen- speicher aus dem zentralen Gleichspannungsstrang aufgestartet wird.

### WEGE ZUR AUSFÜHRUNG DER ERFINDUNG

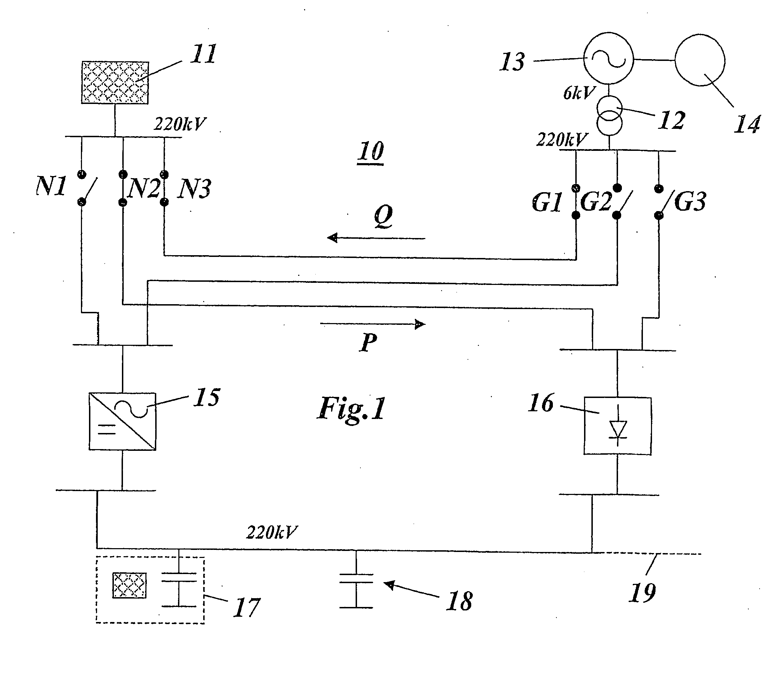

Fig. 1 bis 5 zeigen dasselbe bevorzugte Ausführungsbeispiel einer elektrischen Anlage nach der Erfindung. Unterschiedlich ist in den einzelnen Figuren das mit der Anlage ausgeführte Verfahren, das sich jeweils aus einer unterschiedlichen Stellung der eingesetzten Schalter ergibt.

Die elektrische Anlage 10 der Fig. 1 bis 5 umfasst eine Kopplung zwischen einem Stromversorgungsnetz 11 (symbolisch als Block mit Netzschraffur eingezeichnet) und einem (oder mehreren) nur angedeuteten zentralen Gleichspannungsstrang (Gleichspannungssträngen) ("DC Backbone") 19. Sowohl das Stromversorgungsnetz 11 als auch der zentrale Gleichspannungsstrang 19 befinden sich im Beispiel auf einem 220kV-Spannungsniveau. Andere Spannungsniveaus sind aber ebenso denkbar. Der zentrale Gleichspannungsstrang 19 kann eine Verbindung zu anderen Netzen herstellen. Er kann aber auch selbst Teil eines Gleichspannungsnetzes sein.

An den zentralen Gleichspannungsstrang 19 ist ein AC-DC-Umrichter 15 mit seinem Eingang und eine Gleichrichterbrücke 16 mit ihrem Ausgang angeschlossen. Das Stromversorgungsnetz 11 kann mittels der Netzschalter N1, N2 wahlweise über den AC-DC-Umrichter 15 Leistung aus dem zentralen Gleichspannungsstrang 19 entnehmen, oder über die Gleichrichterbrücke 16 Leistung an den zentralen Gleichspannungsstrang 19 abgeben. Auf der Seite des zentralen Gleichspannungsstrangs 19 sind zur Glättung Glättungskondensatoren 18 vorgesehen. Zur Energiespeicherung kann zusätzlich ein konventioneller Gleichstromspeicher 17, z.B. in Form einer supraleitenden Spule oder einer Kondensatorbatterie, angeschlossen sein.

Zur Stabilisierung des Stromversorgungsnetzes 11 ist nun ein rotierender Massenspeicher 13, 14 vorgesehen, der vorzugsweise eine mit einer Synchronmaschine 13 gekoppelte rotierende Masse 14 umfasst. Die Synchronmaschine 13 arbeitet auf dem 6kV-Niveau und ist mit dem 220kV-Niveau über einen Transformator 12 verbunden. Auch der rotierende Massenspeicher 13, 14 kann mittels entsprechender Generatorschalter G2, G3 wahlweise über den AC-DC-Umrichter 15 Leistung aus dem zentralen Gleichspannungsstrang 19 entnehmen, oder über die Gleichrichterbrücke 16 Leistung an den zentralen Gleichspannungsstrang 19 abgeben. Eine direkte Verbindung zwischen dem rotierenden Massenspeicher 13, 14 und dem Stromversorgungsnetz 11 kann durch die Schalter N3 und G1 hergestellt werden.

Eine erste Betriebsart der Anlage 10 ist in Fig. 1 wiedergegeben. Durch die eingezeichnete Stellung der Schalter N1,..,N3 und G1,..,G3 ist das Stromversorgungsnetz 11 über die Gleichrichterbrücke 16 mit dem zentralen Gleichspannungsstrang 19 verbunden und speist Wirkleistung P (Pfeil in Fig. 1) in den Strang ein. Ebenso ist der rotierende Massenspeicher 13, 14 direkt mit dem Stromversorgungsnetz 11 verbunden und gibt zur Kompensation Blindleistung Q (Pfeil in Fig. 1) an das Netz ab.

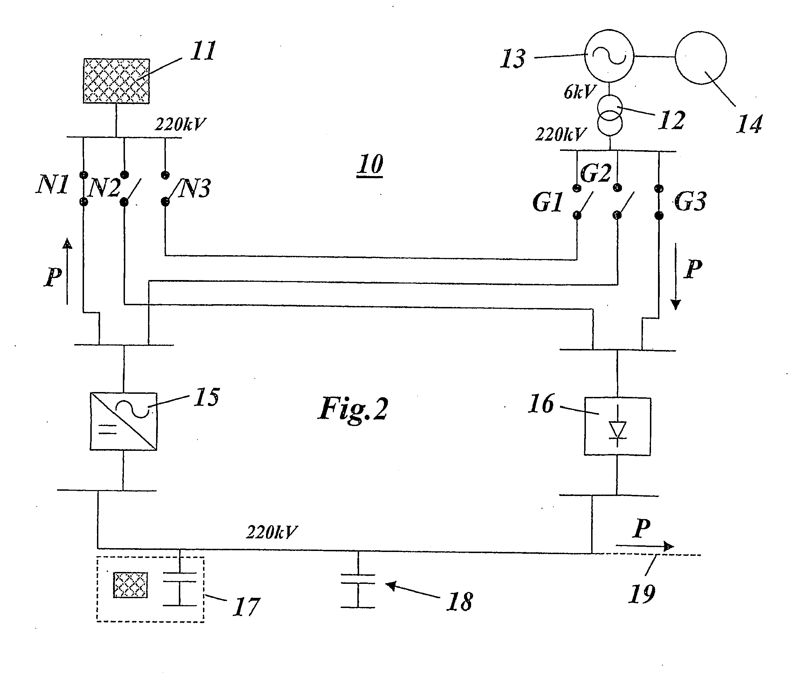

Bei der in Fig. 2 dargestellten Betriebsart speist der rotierende Massenspeicher 13, 14 über die Gleichrichterbrücke 16 Wirkleistung P in den zentralen Gleichspannungsstrang 19 ein, während das Stromversorgungsnetz 11 über den AC-DC-Umrichter 15 Wirkleistung P aus dem zentralen Gleichspannungsstrang 19 entnimmt.

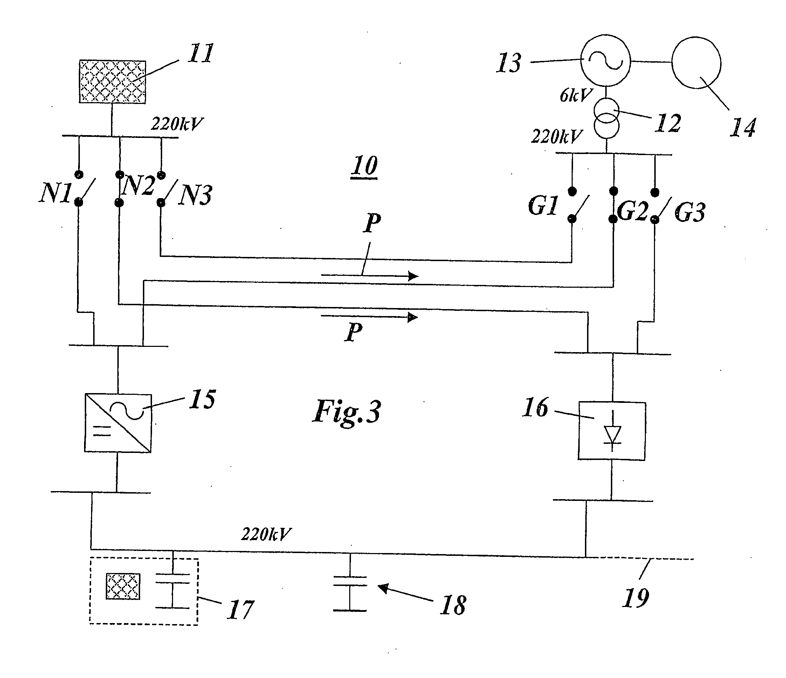

Bei der in Fig. 3 gezeigten Betriebsart erhält der rotierende Massenspeicher 13, 14 über den AC-DC-Umrichter 15 Wirkleistung P aus dem zentralen Gleichspannungsstrang 19. Dieser erhält (wie dargestellt) über die Gleichrichterbrücke 16 Wirkleistung aus dem Stromversorgungsnetz 11 oder von anderen (nicht dargestellten) Gleichspannungssträngen.

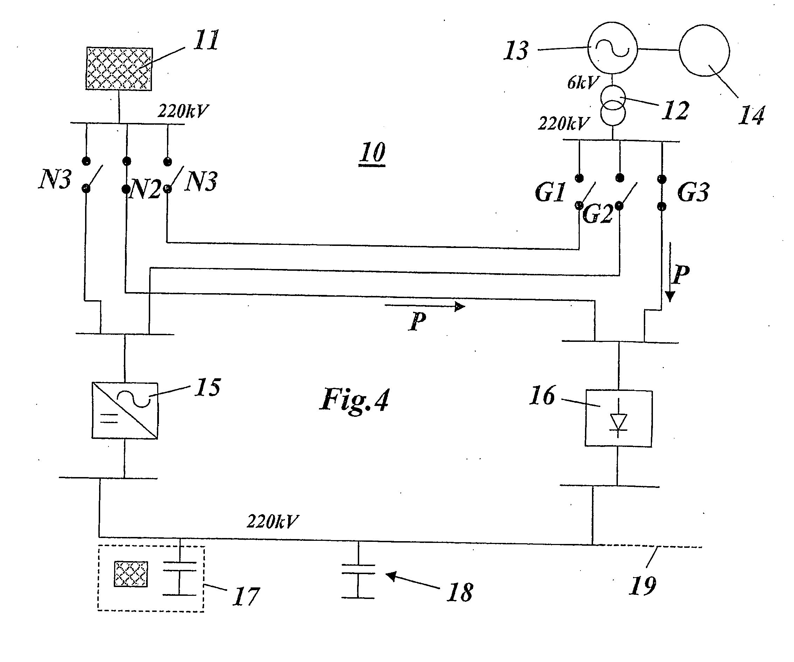

Bei der in Fig. 4 wiedergegebenen Betriebsart speisen sowohl das Stromversorgungsnetz 11 als auch der rotierende Massenspeicher 13, 14 über die Gleichrichterbrücke 16 Wirkleistung P in den zentralen Gleichspannungsstrang 19.

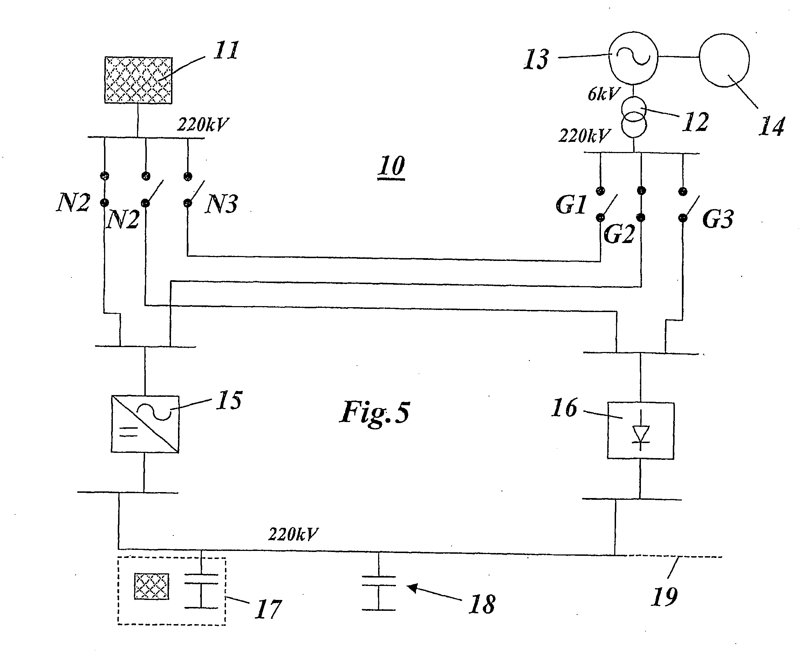

Bei der Betriebsart gemäss Fig. 5 schliesslich speist der zentrale Gleichspannungsstrang 19 über den AC-DC-Umrichter 15 sowohl das Stromversorgungsnetz 11 als auch den rotierenden Massenspeicher 13, 14.

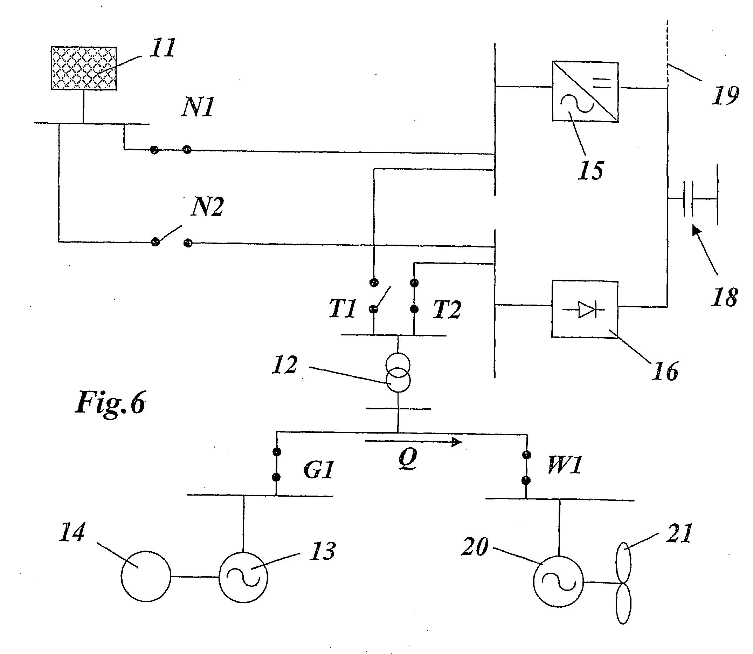

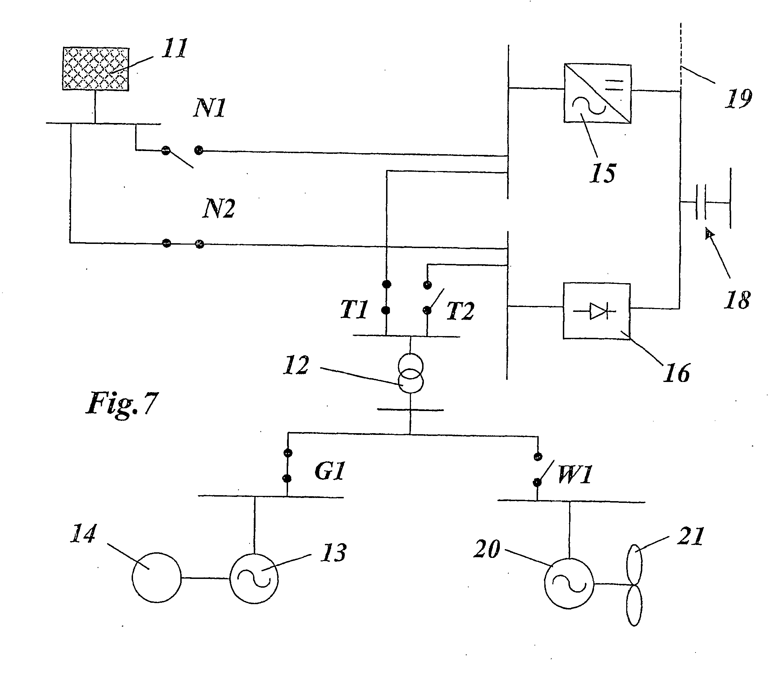

Eine besondere Bedeutung bekommt der erfindungsgemäss Einsatz eines rotierenden Massenspeichers im Zusammenhang mit der Windenergieerzeugung in einem Windpark oder dgl.. In Fig. 6 und 7 ist eine entsprechende Konfiguration der elektrischen Anlage dargestellt, wobei wenigstens eine aus einer Asynchronmaschine 20 und einem Windrad 21 bestehende Windenergieanlage 20, 21 vorgesehen ist. Das Stromversorgungsnetz 11 kann wiederum mittels Netzschaltern N1, N2 wahlweise über die Gleichrichterbrücke 16 oder den AC-DC-Umrichter 15 mit dem zentralen Gleichspannungsstrang 19 verbunden werden. Desgleichen kann der rotierende Massenspeicher 13, 14 mittels der Schalter T1, T2 wahlweise über die Gleichrichterbrücke 16 oder den AC-DC-Umrichter 15 mit dem zentralen Gleichspannungsstrang 19 verbunden werden. Mittels der Schalter G1 und W1 können Windenergieanlage 20, 21 und rotierender Massenspeicher 13, 14 parallel geschaltet werden. Damit ist es möglich, die Energieverteilung über die Leistungselektronik aus dem Stromversorgungsnetz 11 und in das Stromversorgungsnetz 11 zu reduzieren.

In der Betriebsart der Fig. 6 gibt der rotierende Massenspeicher 13, 14 Blindleistung Q an die Windenergieanlage 20, 21 ab. Sowohl der rotierende Massenspeicher 13, 14 als auch die Windenergieanlage 20, 21 sind in der Frequenz ei n-stellbar, so dass Leistungsschwankungen reduziert werden, bevor das Stromversorgungsnetz 11 unterstützend eingreifen muss.

In der Betriebsart gemäss Fig. 7 wird der rotierende Massenspeicher 13, 14 über den AC-DC-Umrichter 15 gestartet (Schalter T1 und G1 geschlossen), bevor er dann mit der Windenergieanlage 20, 21 verbunden wird (Fig. 6).

Der rotierende Massenspeicher 13, 14 kann zusätzl ich optimiert werden, um die im Rahmen der Erfindung auftretenden Aufgaben besser erfüllen zu können. So ist es denkbar, den Luftdruck um die rotierenden Massen herum abzusenken, um Ventilationsverluste zu verringern und die Speichereffizienz zu steigern.

Weiterhin ist es denkbar, für die Rotation der Massen Frequenzen zu verwenden, die es ermöglichen, den rotierenden Massenspeicher direkt ans Netz anzuschliessen und so eine Blindleistungskompensation zu erzielen.

Auch können Umdrehungsfrequenzen von 2- oder 4-Pol-Generatoren benutzt werden, um die für die Speicherung notwendigen Massen zu verringern.

Schliesslich ist es denkbar, bei den erfindungsgemässen elektrischen Anlagen AC-DC-Umrichter und Gleichrichterbrücken vorzusehen, die auf einem niedrigen Spannungsniveau arbeiten. In diesem Fall können die zentralen Gleichspannungsstränge durch Supraleiter untereinander verbunden sein.

### BEZUGSZEICHENLISTE

- 10: elektrische Anlage
- 11: Stromversorgungsnetz
- 12: Transformator
- 13: Synchronmaschine (Generator/Motor)
- 14: rotierende Masse
- 15: AC-DC-Umrichter
- 16: Gleichrichterbrücke
- 17: Gleichstromspeicher
- 18: Glättungskondensator
- 19: zentraler Gleichspannungsstrang (DC Backbone)
- 20: Asynchronmaschine
- 21: Windrad
- G1,G2,G3: Generatorschalter
- N1,N2,N3: Netzschalter
- P: Wirkleistung
- Q: Blindleistung
- T1,T2: Schalter
- W1: Schalter

## Patentansprüche

1. Elektrische Anlage (10), bei welcher ein Stromversorgungsnetz (11) über einen AC-DC-Umrichter (15) mit wenigstens einem zentralen
Gleichspannungsstrang (19) verbindbar ist, wobei zur Stabilisierung des Stromversorgungsnetzes (11) ein rotierender Massenspeicher (13, 14) vorgesehen ist, **dadurch gekennzeichnet, dass** eine Gleichrichterbrücke (16) zur Verbindung des Stromversorgungsnetzes (11) mit dem zentralen Gleichspannungsstrang (19) vorgesehen ist, und dass der rotierende Massenspeicher (13, 14) wahlweise über den AC-DC-Umrichter (15) oder die Gleichrichterbrücke (16) mit dem wenigstens einen zentralen Gleichspannungsstrang (19) oder direkt mit dem Stromversorgungsnetz (11) verbindbar ist.

2. Elektrische Anlage nach Anspruch 1, **dadurch gekennzeichnet, dass** der zentrale Gleichspannungsstrang (19) Teil eines Gleichspannungsnetzes ist.

3. Elektrische Anlage nach Anspruch 1 oder 2, **dadurch gekennzeichnet, dass** der rotierende Massenspeicher (13, 14) eine rotierende Masse (14) umfasst, welche mit einer wahlweise als Motor oder Generator arbeitenden Synchronmaschine (13) gekoppelt ist.

4. Elektrische Anlage nach einem der Ansprüche 1 bis 3, **dadurch gekennzeichnet, dass** zum wahlweisen Verbinden des Stromversorgungsnetzes (11) und des rotierenden Massenspeichers (13,14) untereinander oder mit dem zentralen Gleichspannungsstrang (19) entsprechende Schalter(N1,.., N3; G1,.., G3; T1, T2) vorgesehen sind.

5. Elektrische Anlage nach Anspruch 3, **dadurch gekennzeichnet, dass** die Verbindung der Synchronmaschine (13) des rotierenden Massenspeichers (13, 14) mit den übrigen Teilen der elektrischen Anlage (10) über einen Transformator (12) erfolgt.

6. Elektrische Anlage nach einem der Ansprüche 1 bis 5, **dadurch gekennzeichnet, dass** am Ausgang der Gleichrichterbrücke (16) Glättungskondensatoren (18) angeordnet sind.

7. Elektrische Anlage nach einem der Ansprüche 1 bis 6, **dadurch gekennzeichnet, dass** an den zentralen Gleichspannungsstrang (19) ein Gleichstromspeicher (17), insbesondere in Form einer supraleitenden Spule oder einer Kondensatorbatterie, angeschlossen ist.

8. Elektrische Anlage nach einem der Ansprüche 1 bis 7, **dadurch gekennzeichnet, dass** parallel zum rotierenden Massenspeicher (13, 14) wenigstens eine Windenergieanlage (20, 21) vorgesehen ist, welche wahlweise mit dem rotierenden Massenspeicher (13, 14) verbindbar ist.

9. Elektrische Anlage nach Anspruch 8, **dadurch gekennzeichnet, dass** die wenigstens eine Windenergieanlage (20, 21) ein mit einer Asynchronmaschine (20) gekoppeltes Windrad (21) umfasst.

10. Elektrische Anlage nach Anspruch 8 oder 9, **dadurch gekennzeichnet, dass** zum wahlweisen Verbinden der Windenergieanlage (20, 21) mit dem rotierenden Massenspeicher (13, 14) entsprechende Schalter(G1, W1) vorgesehen sind.

11. Verfahren zum Betrieb einer elektrischen Anlage (10) nach Anspruch 1, **dadurch gekennzeichnet, dass** der rotierende Massenspeicher (13, 14) zum Einspeisen von Wirkleistung oder Blindleistung aus dem rotierenden Massenspeicher in das Netz oder zum Aufnehmen von Wirkleistung aus dem zentralen Gleichspannungsstrang oder zur Abgabe von Wirkleistung an den zentralen Gleichspannungsstrang wahlweise mit dem Stromversorgungsnetz (11) oder über den AC-DC-Umrichter (15) oder die Gleichrichterbrücke(16) mit dem wenigstens einen zentralen Gleichspannungsstrang (19) verbunden wird.

12. Verfahren nach Anspruch 11, **dadurch gekennzeichnet, dass** der rotierende Massenspeicher (13, 14) zur Einspeisung von Blindleistung (Q) an das Stromversorgungsnetz (11) angeschlossen wird, und dass das Stromversorgungsnetz (11) über die Gleichrichterbrücke (16) Wirkleistung (P) in den zentralen Gleichspannungsstrang (19) einspeist.

13. Verfahren nach Anspruch 11, **dadurch gekennzeichnet, dass** der rotierende Massenspeicher (13, 14) über die Gleichrichterbrücke (16) Wirkleistung (P) in den zentralen Gleichspannungsstrang (19) einspeist, und dass über den AC-DC-Umrichter (15) Wirkleistung (P) aus dem zentralen Gleichspannungsstrang (19) in das Stromversorgungsnetz (11) eingespeist wird.

14. Verfahren nach Anspruch 11, **dadurch gekennzeichnet, dass** in den rotierenden Massenspeicher (13, 14) über den AC-DC-Umrichter (15) Wirkleistung (P) aus dem zentralen Gleichspannungsstrang (19) eingespeist wird, und dass das Stromversorgungsnetz (11) über die Gleichrichterbrücke(16) Wirkleistung (P) in den zentralen Gleichspannungsstrang (19) einspeist.

15. Verfahren nach Anspruch 11, **dadurch gekennzeichnet, dass** sowohl das Stromversorgungsnetz(11) als auch der rotierende Massenspeicher (13, 14) über die Gleichrichterbrücke (16) Wirkleistung (P) in den zentralen Gleichspannungsstrang (19) einspeisen.

16. Verfahren nach Anspruch 11, **dadurch gekennzeichnet, dass** sowohl das Stromversorgungsnetz (11) als auch der rotierende Massenspeicher (13, 14) über den AC-DC-Umrichter (15) mit Wirkleistung (P) aus dem zentralen Gleichspannungsstrang (19) versorgt werden.

17. Verfahren nach Anspruch 11, **dadurch gekennzeichnet, dass** der rotierende Massenspeicher (13, 14) Blindleistung (Q) in wenigstens eine Windenergieanlage (20,21) einspeist.

18. Verfahren nach Anspruch 11, **dadurch gekennzeichnet, dass** der rotierende Massenspeicher (13, 14) zunächst über den AC-DC-Umrichter (15) aus dem zentralen Gleichspannungsstrang (19) aufgestartet wird und dann mit wenigstens einer Windenergieanlage (20, 21) verbunden wird.

## Claims

1. Electrical installation (10) in which a power supply network (11) can be connected via an AC/DC converter (15) to at least one central DC branch (19), a rotating mass energy store (13, 14) being provided to stabilize the power supply network (11), **characterized in that** a rectifier bridge (16) is provided for the connection of the power supply network (11) to the central DC branch (19), and **in that** the rotating mass energy store (13,14) can be selectively connected via the AC/DC converter (15) or the rectifier bridge (16) to the at least one central DC branch (19) or directly to the power supply network (11).

2. Electrical installation according to Claim 1, **characterized in that** the central DC branch (19) is part of a DC network.

3. Electrical installation according to Claim 1 or 2, **characterized in that** the rotating mass energy store (13, 14) includes a rotating mass (14) that is selectively coupled to a synchronous machine (13) operating as a motor or generator.

4. Electrical installation according to one of Claims 1 to 3, **characterized in that** suitable switches (N1,...N3; G1,...,G3; T1,T2) are provided for the selective connection of the power supply network (11) and the rotating mass energy store (13, 14) to each other or to the central DC branch (19).

5. Electrical installation according to Claim 3, **characterized in that** the synchronous machine (13) of the rotating mass energy store (13, 14) is connected to the other parts of the electrical installation (10) by means of a transformer (12).

6. Electrical installation according to one of Claims 1 to 5, **characterized in that** smoothing capacitors (18) are arranged at the output of the rectifier bridge (16).

7. Electrical installation according to one of Claims 1 to 6, **characterized in that** a DC energy store element (17), especially in the form of a superconducting coil or a capacitor bank, is connected to the central DC branch (19).

8. Electrical installation according to one of Claims 1 to 7, **characterized in that** at least one wind-energy installation (20, 21), that can be selectively connected to the rotating mass energy store (14), is provided in parallel with the rotating mass energy store (13, 14).

9. Electrical installation according to Claim 8, **characterized in that** the at least one wind-energy installation (20, 21) includes a wind turbine (21) coupled to an asynchronous machine (20).

10. Electrical installation according to Claim 8 or 9, **characterized in that** suitable switches (G1, W1) are provided for the selective connection of the wind-energy installation (20, 21) to the rotating mass energy store (13, 14).

11. Method for operation of an electrical installation (10) according to Claim 1, **characterized in that** the rotating mass energy store (13, 14) is connected selectively to the power supply network (11) or via the AC/DC converter (15) or the rectifier bridge (16) to the at least one central DC branch (19) to feed real power or wattless power from the rotating mass energy store to the network or to take real power from the central DC branch or to supply real power to the central DC branch.

12. Method according to Claim 11, **characterized in that** the rotating mass energy store (13, 14) is connected to feed wattless power (Q) to the power supply network (11), and **in that** the power supply network (11) feeds real power (P) via the rectifier bridge (16) to the central DC branch (19).

13. Method according to Claim 11, **characterized in that** the rotating mass energy store (13, 14) feeds real power (P) via the rectifier bridge (16) to the central DC branch (19), and **in that** real power (P) is fed via the AC/DC converter (15) from the central DC branch (19) to the power supply network (11).

14. Method according to Claim 11, **characterized in that** real power (P) is fed from the central DC branch (19) via the AC/DC converter (15) to the rotating mass energy store (13, 14), and **in that** the power supply network (11) feeds real power (P) via the rectifier bridge (16) to the central DC branch (19).

15. Method according to Claim 11, **characterized in that** both the power supply network (11) and the rotating mass energy store (13, 14) feed real power (P) via the rectifier bridge (16) to the central DC branch.

16. Method according to Claim 11, **characterized in that** both the power supply network (11) and the rotating mass energy store (13, 14) are supplied with real power (P) from the central DC branch (19) via the AC/DC converter (15).

17. Method according to Claim 11, **characterized in that** the rotating mass energy store (13, 14) feeds wattless power (Q) to a at least one wind-energy installation (20, 21).

18. Method according to Claim 11, **characterized in that** the rotating mass energy store (13, 14) is first started from the central DC branch (19) via the AC/DC converter (15) and then connected to at least one wind-energy installation (20, 21).

## Revendications

1. Dispositif électrique (10) par lequel un réseau (11) d'alimentation en courant peut être relié à au moins une barre centrale (19) à tension continue par un redresseur (15) courant alternatif-courant continu,
une masse rotative d'accumulation (13, 14) étant prévue pour stabiliser le réseau (11) d'alimentation en tension,
**caractérisé en ce que**
un pont redresseur (16) est prévu pour relier le réseau (11) d'alimentation en courant à la barre centrale (19) à tension continue et
**en ce que** la masse rotative d'accumulation (13, 14) peut être reliée sélectivement par le convertisseur (15) courant alternatif-courant continu ou le pont redresseur (16) à la ou aux barres centrales (19) à tension continue ou directement au réseau (11) d'alimentation en courant.

2. Dispositif électrique selon la revendication 1, **caractérisé en ce que** la barre centrale (19) à tension continue fait partie d'un réseau à tension continue.

3. Dispositif électrique selon les revendications 1 ou 2, **caractérisé en ce que** la masse rotative d'accumulation (13, 14) comprend une masse rotative (14) couplée à une machine synchrone (13) qui travaille sélectivement comme moteur ou comme générateur.

4. Dispositif électrique selon l'une des revendications 1 à 3, **caractérisé en ce que** des commutateurs (N1, ..., N3; G1, ..., G3; T1, T2) respectifs sont prévus pour relier sélectivement l'un à l'autre le réseau (11) d'alimentation en courant à la masse rotative d'accumulation (13, 14) ou à la barre centrale (19) à tension continue.

5. Dispositif électrique selon la revendication 3, **caractérisé en ce que** la liaison de la machine synchrone (13) de la masse rotative d'accumulation (13, 14) du dispositif électrique (10) s'effectue par un transformateur (12).

6. Dispositif électrique selon l'une des revendications 1 à 5, **caractérisé en ce que** des condensateurs de lissage (18) sont disposés à la sortie du pont redresseur (16).

7. Dispositif électrique selon l'une des revendications 1 à 6, **caractérisé en ce qu'**un accumulateur de courant continu (17) qui présente en particulier la forme d'une bobine supraconductrice ou d'une batterie de condensateurs est raccordé à la barre centrale (19) à tension continue.

8. Dispositif électrique selon l'une des revendications 1 à 7, **caractérisé en ce qu'**au moins une installation (20, 21) de captage d'énergie éolienne est prévue en parallèle à la masse rotative d'accumulation (13, 14) et peut être reliée sélectivement à la masse rotative d'accumulation (13, 14).

9. Dispositif électrique selon la revendication 8, **caractérisé en ce que** la ou les installations (20, 21) de captage d'énergie éolienne comprennent un rotor éolien (21) accouplé à une machine asynchrone (20).

10. Dispositif électrique selon les revendications 8 ou 9, **caractérisé en ce que** des commutateurs respectifs (G1, W1) sont prévus pour relier sélectivement l'installation (20, 21) de captage d'énergie éolienne à la masse rotative d'accumulation (13, 14).

11. Procédé de conduite d'un dispositif électrique (10) selon la revendication 1, **caractérisé en ce que** la masse rotative d'accumulation (13, 14) est reliée sélectivement au réseau (11) d'alimentation en courant par l'intermédiaire du convertisseur (15) courant alternatif-courant continu ou du pont redresseur (16) à la ou aux barres centrales (19) à tension continue pour faire injecter de la puissance active ou de la puissance réactive dans le réseau par la masse rotative d'accumulation, pour prélever de la puissance active sur la barre centrale à tension continue ou pour délivrer de la puissance active à la barre centrale à tension continue.

12. Procédé selon la revendication 11, **caractérisé en ce que** la masse rotative d'accumulation (13, 14) est raccordée au réseau (11) d'alimentation en courant pour y injecter de la puissance réactive (Q) et **en ce que** le réseau (11) d'alimentation en courant injecte de la puissance active (P) dans la barre centrale (19) à tension continue par l'intermédiaire du pont redresseur (16).

13. Procédé selon la revendication 11, **caractérisé en ce que** la masse rotative d'accumulation (13, 14) injecte de la puissance active (P) dans la barre centrale (19) à tension continue par l'intermédiaire du pont redresseur (16) et **en ce que** de la puissance active (P) provenant de la barre centrale (19) à tension continue est injectée dans le réseau (11) d'alimentation en courant par l'intermédiaire du convertisseur (15) courant alternatif-courant continu.

14. Procédé selon la revendication 11, **caractérisé en ce que** de la puissance active (P) provenant de la barre centrale (19) à tension continue est injectée dans la masse rotative d'accumulation (13, 14) par l'intermédiaire du convertisseur (15) courant alternatif-courant continu et **en ce que** le réseau (11) d'alimentation en courant injecte de la puissance active (P) dans la barre centrale (19) à tension continue par l'intermédiaire du pont redresseur (16).

15. Procédé selon la revendication 11, **caractérisé en ce que** tant le réseau (11) d'alimentation en courant que la masse rotative d'accumulation (13, 14) injectent de la puissance active (P) dans la barre centrale (19) à tension continue par l'intermédiaire du pont redresseur (16).

16. Procédé selon la revendication 11, **caractérisé en ce que** tant le réseau (11) d'alimentation en courant que la masse rotative d'accumulation (13, 14) sont alimentés en puissance active (P) provenant de la barre centrale (19) à tension continue par l'intermédiaire du convertisseur (15) courant alternatif-courant continu.

17. Procédé selon la revendication 11, **caractérisé en ce que** la masse rotative d'accumulation (13, 14) injecte de la puissance réactive (Q) dans la ou les installations (20, 21) de captage d'énergie éolienne.

18. Procédé selon la revendication 11, **caractérisé en ce que** la masse rotative d'accumulation (13, 14) est d'abord démarrée par la barre centrale (19) à tension continue par l'intermédiaire du convertisseur (15) courant alternatif-courant continu et est ensuite reliée à la ou aux installations (20, 21) de captage d'énergie éolienne.
